# EUROPÄISCHE PATENTANMELDUNG

(11) **EP 2 211 446 A1**
(43) Veröffentlichungstag der Anmeldung: **28.07.2010**
(21) Anmeldenummer: 09000930.9
(22) Anmeldetag: 23.01.2009
(51) Int. Cl.: H02K 17/36, H02K 17/42, H02K 16/00

(54) **Asynchronmaschine**

(71) Anmelder: Tayegyan, Mikayel, M., Rostov-na-Donu 344068 (RU); Yurgalov Pavel, V., Rostov-na-Donu 344064 (RU)
(72) Erfinder: Tayegyan, Mikayel, M., Rostov-na-Donu 344068 (RU); Yurgalov Pavel, V., Rostov-na-Donu 344064 (RU)
(74) Vertreter: Jeck, Anton

(57) **Zusammenfassung**

Die Erfindung bezieht sich auf eine Asynchronmaschine mit zwei Ständern und einem gemeinsamen Rotor (5). Die Leistungsfähigkeit wird erhöht durch eine Positionierung des gemeinsamen Rotors (5) in freier Umdrehung relativ zu einer Welle und durch das Vorhandensein von zwei verschiedenen magnetischen Leitern (1, 3) mit zwei getrennten Kurzschlusswicklungen (6) oder mit zwei gemeinsamen Kurzschlusswicklungen einer direkten und einer Gegenwicklung relativ zu einander oder mit einer Kombination aus zwei getrennten und zwei gemeinsamen Kurzschlusswicklungen einer direkten und einer Gegenwicklung (7) relativ zu einander; wobei einer der Ständer an der sich drehenden Welle befestigt ist (Fig. 1).

## Beschreibung

Die Erfindung betrifft eine Asynchronmaschine mit zwei Ständern und einem gemeinsamen Rotor, gekennzeichnet durch eine Positionierung des gemeinsamen Rotors in freier Umdrehung relativ zu einer Welle und durch das Vorhandensein von zwei verschiedenen magnetischen Leitern mit zwei getrennten Kurzschlusswicklungen oder mit zwei gemeinsamen Kurzschlusswicklungen einer direkten und einer Gegenwicklung relativ zu einander oder mit einer Kombination aus zwei getrennten und zwei gemeinsamen Kurzschlusswicklungen einer direkten und einer Gegenwicklung relativ zu einander; wobei einer der Ständer an der sich drehenden Welle befestigt ist.

Bekannt ist ein Elektrogetriebe mit koaxialen Vorrichtungen gemäß dem Erfinderzertifikat UdSSR Nr. 765943 N 02K 16/00 1980 und eine Getriebevorrichtung für Düsenschrauben, die aus Asynchron- und Synchronmaschinen besteht. Obwohl diese eine ganz andere Vorrichtung hinsichtlich Schaltplan, Kinematik, und Nutzungszweck betrifft, hat sie doch zwei Ständer und einen gemeinsamen Rotor mit einer gemeinsamen Kurzschlusswicklung für die zwei Ständer und einen Drehständer.

Bekannt ist auch ein gestuftes Elektrogetriebe aus dem Patent RU 2 050 672 C1, auch gemäß der britischen Patentschrift Nr. 831967 (GB831967) "Electrical drive for transport rollers", das aus zwei elektrischen Asynchronmaschinen mit einer frei drehenden Welle besteht. Das Bindeglied ist der Ständer der zweiten Asynchronmaschine. Dieser Aufbau ist in der Bauart und der technischen Lösung gegenüber der vorherigen Erfindung verschieden. Es sind aber hier zwei Ständer vorhanden, sowie zwei Rotoren mit einer gemeinsamen frei drehenden Welle und einem sich potentiell drehenden Ständer.

Ferner ist ein asynchroner elektrischer Motor aus dem Patent Nr. 1453533 N 02 K bekannt. Dieser besitzt zwei Ständer und einen gemeinsamen Rotor mit einer gemeinsamen Kurzschlusswicklung [von direkten (geraden) und Gegenwicklungsrichtungen]. Die Wicklungsverschiebung ist 180 elektrische Grad. Einer der Ständer hat eine Möglichkeit in Bezug auf den ruhenden Ständer sich zu drehen (180 elektrische Grad). Dieser Motor wird als der Erfindung am nächsten kommende Ausführung angesehen. Die Nachteile dieser asynchronen Maschine sind: eine begrenzte Drehzahl bei bestimmter Polzahl; ein niedriger Leistungsfaktor und ein niedriger Cosϕ im Generatorbetrieb.

Es ist Aufgabe der Erfindung, die Drehzahl bei gleicher Polzahl und die Leistungsfähigkeit sowie den Cosϕ im Generatorbetrieb zu erhöhen.

Die gestellte Aufgabe wird durch die Merkmale des Anspruchs 1 gelöst.

Dabei ist eine zweite Ausführungsvariante möglich, wenn die elektromagnetischen Bewegungswicklungen des magnetischen Leiters des festen Ständers und die potentiell sich drehenden magnetischen Leiter des Ständers durch die Wicklungen von zwei und mehr magnetischen Leitersektoren gebildet werden. Dies wird mittels der gemeinsamen Koppelung an den elektrischen Stromkreis der elektromagnetischen Bewegungswicklung oder durch Anschluss eines Wicklungssektors des sich potentiell drehenden Ständers erreicht.

Die gleiche gemeinsame Koppelung wird in den elektromagnetischen Bewegungswicklungen der zweiten (verbleibenden) magnetischen Leitersektoren des festen Ständers und des sich potentiell drehenden Ständers vorgenommen.

Ein Ausführungsbeispiel der Erfindung ist in der Zeichnung schematisch dargestellt.

### Es zeigen:

- Fig. 1: eine Asynchronmaschine mit zwei Ständern und einem gemeinsamen Rotor und
- Fig. 2: eine Ausführungsvariante der Asynchronmaschine, mit zwei Ständern und einer gemeinsamen Welle.

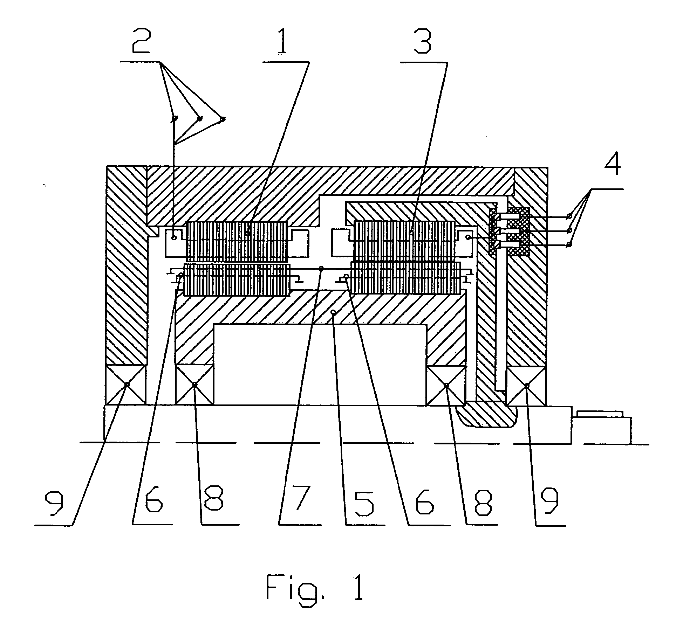

Die Asynchronmaschine nach Fig.1 umfasst einen magnetischen Leiter 1, einen festen Ständer mit Anschlüssen für zwei elektrische Leitungen zur elektromagnetischen Bewegung sowie magnetische Leiter 3 mit einem potentiell drehenden, fest auf der Welle fixierten Ständer (die Fig. 1 zeigt dieses Teil als eine ausgeführte einzelne Gesamteinheit). Es sind Anschlüsse 4 über Kämme elektromagnetischer Bewegungsdrähte vorgesehen

Der potentiell drehende Ständer mit dem magnetischen Leiter 3 ist auf der Welle fest gelegt und kann mittels der Lager 9 im Verhältnis zu dem unveränderlichen festen Ständer mit dem magnetischen Leiter 1, dem Rumpf mit dem Oberteil und den Flanschen gedreht werden.

Der gemeinsame Rotor 5 der Asynchronmaschine, die in Fig. 1 gezeigt ist, ist auf der Welle, mittels Lagern 8 gelagert und kann sich um die Welle frei drehen.

Die zwei magnetischen Leiter des Rotors 5 haben zwei getrennte Kurzschlusswicklungen 6 oder zwei gemeinsame gerade (direkte) und Gegenkurzschlusswicklungen 7 (mit einem relativen Versatz um 180 el. Grad) oder insgesamt zwei getrennte 6 und zwei gemeinsame 7 gerade Gegenkurzschlusswicklungen.

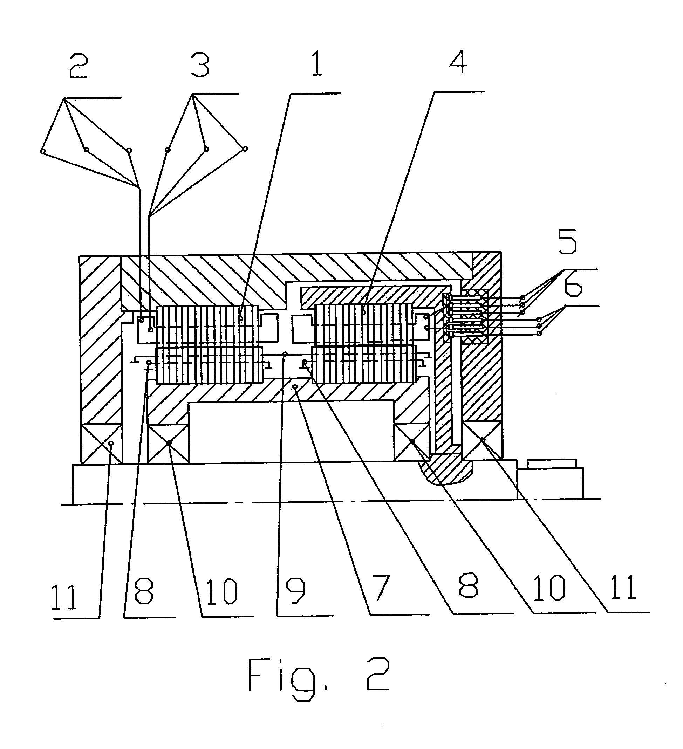

Die Fig. 2 zeigt eine Ausführungsvariante der Asynchronmaschine, mit zwei Ständern und einer gemeinsamen Welle, wobei die elektromagnetischen Bewegungswicklungen des festen Ständers und des potentiell drehenden Ständers aus Sektorwicklungen der magnetischen Leiter der vorstehend genannte Ständer gebildet werden.

Die Fig. 2 zeigt den festen Ständer mit dem magnetischen Leiter 1, den Rumpf bzw. Oberteil, die Flansche und die Lager 9 auf der Welle. Diese sind die netzspannungsseitigen Elemente dieser Vorrichtung.

Die elektromagnetische Bewegung durch den magnetischen Leiter 1 des festen Ständers wird durch die Wicklungen zweier Sektoren erhalten. Die Anschlüsse 2 sind die Anschlüsse der elektromagnetischen Bewegungsdrähte eines Sektors des magnetischen Leiters 1 des festen Ständers. Die Anschlüsse 2' sind die Anschlüsse der elektromagnetischen Bewegungsdrähte eines anderen Sektors des magnetischen Leiters 1 des festen Ständers.

Der potentiell drehende Ständer mit dem magnetischen Leiter 3 ist auf der Welle (in der Fig. 2 erscheint dieses Teil als eine ausgeführte einzelne Gesamtmaßeinheit einer unveränderlichen Verbindung) fest aufgesetzt. Er hat die Möglichkeit einer Drehung zu den Lagern 9 und zwar zusammen mit der Welle relativ zu dem festen Ständer. Die elektromagnetische Bewegung durch den magnetischen Leiter 3 für den potentiell drehenden Ständer wird durch die Wicklungen von zwei Sektoren des besagten magnetischen Leiters 3 erhalten. Die Anschlüsse 4' sind die Anschlüsse über die Kämme der elektromagnetischen Bewegungsdrähte für die Wicklung eines anderen Sektors des potentiell drehenden magnetischen Leiters 3 des Ständers.

Die Anschlüsse 4" sind die Anschlüsse über die Kämme der elektromagnetischen Bewegungsdrähte für die Wicklung eines anderen Sektors des potentiell drehenden magnetischen Leiters 3 des Ständers. Der gemeinsame Rotor 5 mit den zwei getrennten magnetischen Leitern 1, 3 ist auf der Welle, über die Lager 8 gelagert und kann sich frei relativ zu der Welle drehen.

Die zwei magnetischen Leiter 5 des Rotors haben zwei getrennte Kurzschlusswicklungen 6 oder zwei gemeinsame gerade und Gegenkurzschlusswicklungen 7 (mit einem relativen Versatz um 180 el. Grad). Oder die zwei magnetischen Leiter 5 haben insgesamt zwei getrennte 6 und zwei gemeinsame 7 und Gegenkurzschlusswicklungen (mit einem relativen Versatz um 180 el. Grad).

Die Asynchronmaschine, die in Fig. 1 gezeigt ist, funktioniert im Generatorbetrieb wie folgt. Die Anschlüsse 2 des magnetischen Leiters 1 der Bewegungsdrähte des festen Ständers und die Anschlüsse 4 über die elektromagnetischen Bewegungsdrahtkämme des magnetischen Leiters 3 des potentiell drehenden Ständers werden zusammen an den Energienstromkreis angeschlossen. Die mechanische Drehenergie der Welle wird in Folge dieses Anschlusses in den Drahtanschlüssen 2 und 3 in elektrische Energie umgewandelt.

Die Asynchronmaschine, die in Fig. 2 gezeigt ist, funktioniert im Generatorbetrieb wie folgt. Die Anschlüsse 2 eines Sektors des magnetischen Leiters 1 des festen Ständers und die Anschlüsse 4' über die Drahtkämme der elektromagnetischen Bewegungsdrähte des gleichen Sektors des magnetischen Leiter 3 des potentiell drehenden Ständers werden gemeinsam an den Stromkreis angeschlossen.

Bei diesem Anschluss ist die mechanische Drehenergie des Teils der verbundenen Sektoren des gesamten magnetischen Leiters des fest gestellten Ständers und des potentiell drehenden Ständers gleich. An den Anschlüssen 2 und 4', ist die umgewandelte Energie auch in dem genannten Teil der vollständigen Einheit gleich. Der entsprechende Anschluss der Anschlüsse 2' und 4" (oder die verbleibenden Anschlüsse) ergibt eine Zunahme der Kapazität der Asynchronmaschine auf deren volles Niveau.

Das Kernstück der Erfindung ist, dass die Asynchronmaschine mit zwei Ständern und dem gemeinsamen Rotor einen gemeinsamen Freiumdrehungs-Rotor relativ zu der Welle bildet. Dabei sind zwei unterschiedliche magnetische Leiter durch die zwei Kurzschlusswicklungen oder durch die zwei gemeinsamen Kurzschlusswicklungen der direkten und der Gegenwicklung relativ zu einander getrennt (mit einem relativen Versatz von 180 elektrischen Grad). Die Trennung kann auch mittels der zwei getrennten und zwei allgemeinen Kurzschlusswicklungen der direkten und der Gegenwicklung relativ zu einander (mit der relativen Verschiebung von 180 elektrischen Grad) erfolgen. Einer der Ständer wird an der Welle mit einer möglichen Umdrehung zusammen mit der Welle festgesetzt. Die zweite Variante der gleichen Asynchronmaschine nutzt die zusätzlichen elektromagnetischen Bewegungswicklungen des fest gestellten Ständers und des potentiell drehenden Ständers aus. Der drehende Ständer wird durch die elektromagnetischen Bewegungswicklungen von zwei Wicklungssektoren oder mehr Wicklungssektoren der Ständer erhalten. Die Wicklungen werden gemeinsam an den Energienstromkreis der Bewegungswicklung für den festen und den potentiell drehenden Ständer angeschlossen. Solch ein gemeinsamer Anschluss wird auch am zweiten Sektor (oder übrigen weiteren Sektoren) des fest gestellten Ständers und der magnetischen Leiter des potentiell drehenden Ständers angewendet.

## Patentansprüche

1. Asynchronmaschine mit zwei Ständern und einem gemeinsamen Rotor (5), **gekennzeichnet durch** eine Positionierung des gemeinsamen Rotors (5) in freier Umdrehung relativ zu einer Welle und **durch** das Vorhandensein von zwei verschiedenen magnetischen Leitern (1, 3) mit zwei getrennten Kurzschlusswicklungen (6) oder mit zwei gemeinsamen Kurzschlusswicklungen (7) einer direkten und einer Gegenwicklung relativ zu einander oder mit einer Kombination aus zwei getrennten (6) und zwei gemeinsamen Kurzschlusswicklungen (7) einer direkten und einer Gegenwicklung relativ zu einander; wobei einer der Ständer an der sich drehenden Welle befestigt ist.

2. Asynchronmaschine nach Anspruch 1,
**dadurch gekennzeichnet,**
**dass** die elektromagnetischen Bewegungswicklungen des festen Ständers und des potentiell drehenden Ständers durch die elektromagnetischen Bewegungswicklungen von zwei oder mehr Sektoren der magnetischen Leiter (1, 3) der Ständer gebildet sind.

3. Asynchronmaschine nach Anspruch 2,
**dadurch gekennzeichnet,**
**dass** ein gemeinsamer Anschluss (2, 4) zum Energienstromkreis der elektromagnetischen Bewegungswicklung des festgestellten Ständers und der Wicklung eines Sektors des magnetischen Leiters (3) des potentiell drehenden Ständers vorgesehen ist und
**dass** ein solcher gemeinsamer Anschluss (2, 4) auch an den zweiten Sektor oder an weiterhin vorhandene Sektoren des festen Ständers und der magnetischen Leiter (3) des potentiell drehenden Ständers hergestellt ist.

4. Asynchronmaschine nach einem der vorhergehenden Ansprüche 1 bis 3,
**dadurch gekennzeichnet,**
**dass** die direkte Wicklung (6) und die Gegenwicklung (7) einen relativen Versatz von 180° aufweisen.
